**Europäisches Patentamt**

**European Patent Office**

**Office européen des brevets**

(19)

(11) Veröffentlichungsnummer: **0 018 351**
**B1**

(12)

# EUROPÄISCHE PATENTSCHRIFT

(45) Veröffentlichungstag der Patentschrift:
19.01.83

(51) Int. Cl.³: **F 02 D 5/00**

(21) Anmeldenummer: 80890037.7

(22) Anmeldetag: 21.03.80

(54) **Steuerschaltung für die Regelung einer Einspritzpumpe für Dieselmotoren.**

(30) Priorität: 21.03.79 AT 2133/79

(43) Veröffentlichungstag der Anmeldung:
29.10.80 Patentblatt 80/22

(45) Bekanntmachung des Hinweises auf die Patenterteilung:
19.01.83 Patentblatt 83/3

(84) Benannte Vertragsstaaten:
AT DE FR GB

(56) Entgegenhaltungen:
FR-A-2 037 143
FR-A-2 107 478
FR-A-2 116 994
FR-A-2 240 358
FR-A-2 252 490
FR-A-2 273 953
FR-A-2 355 164
GB-A-1 400 397
RESERACH DISCLOSURE, Nr. 166, Februar 1978,
Seiten 46, 47 Nr. 16666 Hampshire, G. B. »Engine
Control Computer« Seiten 46, 47

(73) Patentinhaber: **Friedmann & Maier Aktiengesellschaft,**
**Friedmannstrasse 7, A-5400 Hallein bei Salzburg (AT)**

(72) Erfinder: **Pacha, Franz, Dipl. Ing., Preindlgasse 19,**
**A-1130 Wien (AT)**
Erfinder: **Brasseur, Georg, Dipl. Ing., Eisslergasse 20,**
**A-1130 Wien (AT)**

(74) Vertreter: **Kretschmer, Adolf, Dipl.-Ing.,**
**Schottengasse 3a, A-1014 Wien (AT)** ·

## Steuerschaltung für die Regelung einer Einspritzpumpe für Dieselmotoren

Die Erfindung betrifft eine Steuerschaltungsanordnung für die Steuerung oder Regelung der Positionierung eines Fördermengenbegrenzungsanschlages für die Regelstange einer Dieseleinspritzbrennkraftmaschine in Abhängigkeit von Betriebskenngrößen derselben, wie z. B. Ladedruck, Außendruck, Motortemperatur, Außentemperatur, Kraftstofftemperatur, Drehzahl od. dgl.

Während des Betriebes einer Dieseleinspritzbrennkraftmaschine muß ein zu fettes Gemisch vermieden werden, da ein solches Gemisch neben einer unerwünschten Abgastrübung, d. h. einem Überschreiten der Rauchgrenze, einen Leistungsabfall zur Folge hat und die Gefahr von Motorschäden durch Überhitzung besteht.

Bei Dieselmotoren ist es üblich, einen solchen Fördermengenbegrenzungsanschlag mechanisch und/oder pneumatisch oder hydraulisch zu verstellen. Derartige Anordnungen erfordern Federglieder im Regelgestänge, wie beispielsweise Rückholfedern oder überdrückbare Anschlagfedern, und bei solchen federnden Gestängeverbindungen können im Betrieb Resonanzschwingungen auftreten, wodurch die geforderte Präzision der Regelung nicht gewährleistet ist. Diese bekannten mechanischen Anordnungen erlauben ferner die Anpassung der Regeleinrichtungen an unterschiedliche Betriebsbedingungen nur in Grenzen.

Es ist bereits bekannt, den Fördermengenbegrenzungsanschlag eines Dieselmotors unter Verwendung einer elektronischen Regelvorrichtung zu verstellen. Die Regelstangenverschiebung kann in üblicher Weise durch einen konventionellen Fliehkraftregler und die Betätigung eines willkürlich beeinflußbaren Fördermengenverstellgliedes erfolgen, jedoch soll das Ausmaß dieser Verschiebung durch den Fördermengenbegrenzungsanschlag begrenzt werden. Die bekannten elektronischen Regelvorrichtungen arbeiten mit Meßwertgebern, deren analoge Signale entsprechend verstärkt einem Regelkreis für die Verstellung des Fördermengenbegrenzungsanschlages zugeführt sind. Derartige analoge Signale sind in der Regel äußerst klein und müssen sehr stark verstärkt werden. Hohe Verstärkungen im Zusammenhang mit im Fahrzeug unvermeidlichen Spannungsschwankungen des elektrischen Bordnetzes führen nun zu mangelnder Linearität der Verstärkung, und die gewünschte Präzision der Begrenzung ist daher nur äußerst schwer zu erreichen. Darüber hinaus sind solche Schaltungsanordnungen selbst stark temperaturempfindlich, wodurch sich eine weitere Verzerrung der Regelung ergibt. Es wurde bereits vorgeschlagen, zur Verminderung dieser störenden Effekte Rechenverstärker, d. h. sogenannte Operationsverstärker, mit hoher Gegenkopplung zur Temperaturstabilisierung und Linearisierung zu verwenden, wobei solche Schaltungen eine wesentlich geringere Abhängigkeit von Schwankungen der Versorgungsspannung aufweisen. Nachteilig bei den bekannten Anordnungen bleibt aber trotz verschiedener Verbesserungen die Tatsache, daß die Meßwertgeber, welche analoge Signale liefern, nur sehr kleine Signale liefern. Derartig kleine Signale können in der Übertragungsleitung zum Verstärker durch Umwelteinflüsse, insbesondere Einstreuungen, wesentlich gestört werden, und es besteht daher keine Garantie dafür, daß dem Verstärker ein richtiges Signal zugeführt wird.

Es ist weiter bereits bekannt, in einem Kennliniengenerator auf elektronischem Weg Kurvenzüge nachzubilden, welche das Regelverhalten unter jeweils isolierten Bedingungen wiedergeben sollen. Die erforderliche Regelung kann in solchen Fällen durch entsprechende Schaltungsanordnungen, welche die tatsächlich gemessenen Werte mit den Kennlinienwerten verknüpfen, ausgelöst werden. Auch hier bestehen aber die eingangs geschilderten Probleme, welche eine völlig von Temperatur- und Versorgungsspannungsschwankungen unabhängige exakte Regelung nicht ohne weiteres zulassen.

Schließlich ist aus der GB-A-1 400 397 ein Brennstoffeinspritzsystem für Brennkraftmaschinen bekannt, bei welchem zwei Meßwertgeber für zwei Betriebskenngrößen der Maschine digitale Signale, und zwar gemäß dem Ausführungsbeispiel in Form von 3-Bit-Worten, an eine einen Speicher aufweisende Steuereinheit liefern. Die 3-Bit-Worte ergeben für jede Betriebskenngröße eine Quantisierungsmöglichkeit für acht verschiedene Werte, die über je acht Leitungen in den Speicher der Steuereinheit gelangen, wo durch Verknüpfung der aktuellen Werte der beiden Betriebskenngrößen ein digitales Ausgangssignal für die Steuerung einer Einspritzpumpe erzeugt wird. Die Erzeugung digitaler Signale in den Meßwertgebern erfordert einen verhältnismäßig großen Schaltungsaufwand, und die anschließende Decodierung auf 1 aus n ergibt eine umfangreiche Verdrahtung. Endlich erfolgt die Gewinnung des Steuersignals für die Einspritzpumpe nach einem starren, fest verdrahteten Verknüpfungsschema im Speicher, welches Schema nicht in einfacher Weise zur Anpassung an verschiedene Gegebenheiten oder verschiedene Maschinen geändert werden kann.

Die Erfindung hat sich nun die Aufgabe gestellt, eine Schaltungsanordnung der eingangs genannten Art zu schaffen, mit welcher der Fördermengenbegrenzungsanschlag für die Regelstange einer Dieseleinspritzbrennkraftmaschine in Abhängigkeit von Betriebskenngrößen derselben, wie z. B. Ladedruck, Außendruck, Motortemperatur, Außentemperatur, Kraftstofftemperatur, Drehzahl od. dgl., gesteuert oder geregelt werden kann und welche sich durch eine gegenüber den bekannten Anordnungen wesentlich verbesserte Unabhängigkeit von Außeneinflüssen, Einfachheit und Anpassungsfähigkeit auszeichnet. Zur Lösung dieser Aufgabe ist die erfindungsgemäße Schaltungsanordnung im wesentlichen gekennzeichnet durch Meßwertgeber für die Betriebskenngrößen, in deren Ausgangssignalen der Meßwert in Form eines Zeitintervalls oder einer Periodendauer bzw. Frequenz vorliegt, einen digital arbeitenden Mikrocomputer, dessen Eingang die Ausgangssignale der Meßwertgeber über elektrische Leitungen zugeführt sind, und ein digital ansteuerbares Stellglied für den Begrenzungsanschlag, welchem die digitalen Ausgangssignale des Mikrocomputers über elektrische Leitungen zugeführt sind. Dadurch, daß erfindungsgemäß die Meßwertgeber Ausgangssignale liefern, die vom Mikrocomputer unmittelbar verarbeitet werden können, werden Schwankungen der Versorgungsspannung irrelevant und die für eine exakte Regelung erforderliche korrekte Information gewährleistet. Durch die Verwendung eines Mikrocomputers für die Aufarbeitung der Signale läßt sich durch entsprechende Software eine weitere Erhöhung der Betriebssicherheit erzielen und es können die erforderlichen Regelinformationen vom Meßwertgeber rasch abgefragt und verifiziert werden. Die Verwendung eines Mikrocomputers erlaubt aber gegenüber den bekannten elektrischen Anordnungen mit Prozeßrechnern darüber hinaus eine besonders einfache Anpassung und Justierung der Schaltungsanordnung, da derartige Mikrocomputer frei programmierbar sind. Mit einem solchen Mikrocomputer lassen sich beliebig komplexe Steuer- bzw. Regelvorgänge auslösen und es werden Verknüpfungen der Signale der Meßwertgeber möglich, welche auf analogem Weg nur mit überaus hohem Schaltungsaufwand oder überhaupt nicht realisiert werden können. Vor allen Dingen wird bei der erfindungsgemäßen Schaltungsanordnung bewußt auf gemischt analog-digital-analoge Einrichtungen, wie sie durch einfachen Ersatz des analog arbeitenden Prozeßrechners durch einen digital arbeitenden Mikrocomputer bei den bekannten Regeleinrichtungen zu erreichen wären, verzichtet, wobei die Nachteile der Wandlung digitalanaloger bzw. analog-digitaler Signale vermieden werden. Das Konzept der digitalen Verarbeitung wird erfindungsgemäß auch auf die Ansteuerung des Stellgliedes für den Begrenzungsanschlag angewendet, wodurch die Präzision und Exaktheit der gewünschten Zuordnung der Meßwerte zu Positionen des Begrenzungsanschlages unabhängig von äußeren Einflüssen und vor allen Dingen mit hoher Langzeitstabilität gewährleistet ist.

Gemäß einer bevorzugten Weiterbildung der erfindungsgemäßen Schaltungsanordnung ist wenigstens ein Meßwertgeber für die Erfassung einer Temperatur als temperaturabhängige Konstantstromquelle ausgebildet, welche mit einem Kondensator elektrisch verbunden ist und mit diesem das zeitbestimmende Glied eines Multivibrators bildet. Ein solcher Meßwertgeber liefert unmittelbar digital auswertbare Ausgangsgrößen, nämlich Zeitperioden, wobei beispielsweise Impulsdauer oder Frequenz gemessen werden kann. Eine Konstantstromquelle zeichnet sich aufgrund ihres überaus hohen Innenwiderstandes durch Unempfindlichkeit gegenüber Induktionsströmen und Störspannungsspitzen, wie sie insbesondere im Bordnetz eines Kraftfahrzeuges auftreten können, aus und ist daher besonders geeignet für Temperaturmessungen im Kraftfahrzeug.

Vorzugsweise ist wenigstens ein Meßwertgeber für die Erfassung eines Druckes von wenigstens einem druckempfindlichen elektrischen Bauelement gebildet, welche(s) in einer vorzugsweise temperaturkompensierten Brückenschaltung wenigstens einen Teil des zeitbestimmenden Gliedes eines Multivibrators bildet oder bilden. Ein solcher Druckmeßwertgeber liefert gleichfalls Zeitperioden, wobei mit Vorteil ebenso wie bei dem genannten Temperaturmeßwertgeber ein monostabiler Multivibrator vorgesehen ist. Ein solcher monostabiler Multivibrator ist ohne Schwierigkeiten schaltbar und ermöglicht in einfacher Weise die Einleitung der Meßvorgänge der Meßwertgeber durch den Mikrocomputer selbst. Ein Druckmeßwertgeber kann auch von einer Meßdosen-Spulen-Anordnung gebildet sein, deren druckabhängige Induktivitätsveränderung die Resonanzfrequenz eines Schwingkreises bestimmt. Die Anregung des Schwingkreises kann in diesem Fall gleichfalls vom Mikrocomputer initialisiert werden, wofür ein kurzer Impuls abgegeben wird, worauf beispielsweise die Periodendauer der Resonanzfrequenz gemessen wird. Die Ausbildung kann hierbei in einfacher Weise so getroffen sein, daß die Meßdosen-Spulen-Anordnung relativ zueinander verschieblich gelagerte Schalenkernhälften aufweist, wobei eine Schalenkernhälfte ortsfest gelagert und die andere bewegliche Schalenkernhälfte mit der Membran der Meßdose verbunden ist. Mit Rücksicht auf die relativ hohe Spannungsüberhöhung im Resonanzfall ist es vorteilhaft, wenn das Ausgangssignal des Resonanzschwingkreises einem Begrenzerverstärker zugeführt ist, dessen im wesentlichen rechteckige Impulse dem Mikrocomputer zur Auswertung der Frequenz oder der Periodendauer zugeführt sind. Alle diese Meßwertgeber zeichnen sich neben ihrer Störungsunempfindlichkeit auch noch dadurch aus, daß mit einem Minimum an Leitungen das Auslangen gefunden werden kann, da bei Verwendung eines Mikrocomputers mit bidirektionalen Ports lediglich eine Signalleitung pro Meßwertgeber erforderlich ist.

Die Signale eines üblichen Drehzahlmeßwertgebers können in der Regel gleichfalls unmittelbar dem Mikrocomputer zugeführt werden, da diese Signale digital auswertbar sind.

Gemäß einer bevorzugten Weiterbildung der Erfindung ist zur Verstellung des Fördermengenbegrenzungsanschlages ein Schrittmotor mit vorbestimmter und/oder rückgemeldeter Ausgangslage vorgesehen, welcher über eine Getriebekette, beispielsweise eine Nockenscheibe, einen Gewindetrieb, einen Kurbeltrieb oder einen Zahnstangentrieb, mit dem Fördermengenbegrenzungsanschlag verbunden ist. Ein solcher Schrittmotor kann, wenn er von einer vorbestimmten Ausgangslage aus mit digitalen Signalen angesteuert wird, unmittelbar die gewünschte Positionierung einnehmen, ohne daß hierfür ein gesonderter Regelkreis erforderlich ist. Das Signal des Mikrocomputers muß zu diesem Zweck lediglich verstärkt werden, wobei die Linearität der Verstärkung unkritisch ist. Diese Ausbildung ermöglicht auch einen vernünftigen Notbetrieb, bei welchem der Begrenzungsanschlag in einer für alle Betriebszustände unterhalb der Rauchgrenze liegenden Begrenzungsstellung verbleibt, bis seinem Stellglied wiederum Signale des Mikrocomputers zur Verfügung stehen. Hierzu kann der Schrittmotor beispielsweise im stromlosen Zustand mechanisch, beispielsweise durch Federn, in die gewünschte Notbetriebslage verdreht werden.

Das Stellglied des Fördermengenbegrenzungsanschlages kann aber auch vom gemeinsamen Kern einer Spulenkombination gebildet sein, welcher Kern in jeder Stellung mechanisch feststellbar ist und in einem geschlossenen Regelkreis durch Änderung des Tastverhältnisses der Versorgungsspannung der Spulen durch den Mikrocomputer verstellbar ist. Auch ein -solches Stellglied kann unmittelbar digital angesteuert werden und es ist somit eine digital-analoge Umwandlung nicht erforderlich. Eine weitere Möglichkeit für die Ausbildung des Stellgliedes besteht in einem an sich bekannten Servosystem darin, daß ein digital angesteuertes Hilfsaggregat, insbesondere ein elektromagnetisches Ventil, vorgesehen ist. Ein solches elektromagnetisches Ventil kann beispielsweise von einem Schrittmotor oder vom gemeinsamen Kern einer Spulenkombination betätigt sein.

Die Erfindung ist nachfolgend an Hand der Figuren der Zeichnung näher erläutert. Es zeigt

Fig. 1 ein Diagramm, welches die Fördermenge als Funktion der Drehzahl bei unveränderter Regelgliedstellung und die Rauchgrenze über der Drehzahl darstellt,

Fig. 2 eine diagrammatische Darstellung der zulässigen Fördermenge bei konstanter Drehzahl und veränderlicher Lufttemperatur über dem absoluten Luftdruck,

Fig. 3 die erforderliche Startmenge bei verschiedenen Motortemperaturen sowie den Regelbereich eines mechanischen Drehzahlreglers,

Fig. 4 ein Blockdiagramm der erfindungsgemäßen Schaltungsanordnung,

Fig. 5 ein Blockdiagramm eines Temperaturmeßwertgebers,

Fig. 6 ein Blockdiagramm eines Druckmeßwertgebers,

Fig. 7 eine Schnittdarstellung eines druckempfindlichen Elementes für die Anordnung nach Fig. 6,

Fig. 8 eine Brückenschaltung mit einem Multivibrator für den Druckmeßwertgeber,

Fig. 9 einen Druckmeßwertgeber mit einem Schwingkreis,

Fig. 10 ein Stellglied für die Verstellung des Fördermengenbegrenzungsanschlages und

Fig. 11 eine weitere Ausführungsform eines Stellgliedes für den Fördermengenbegrenzungsanschlag.

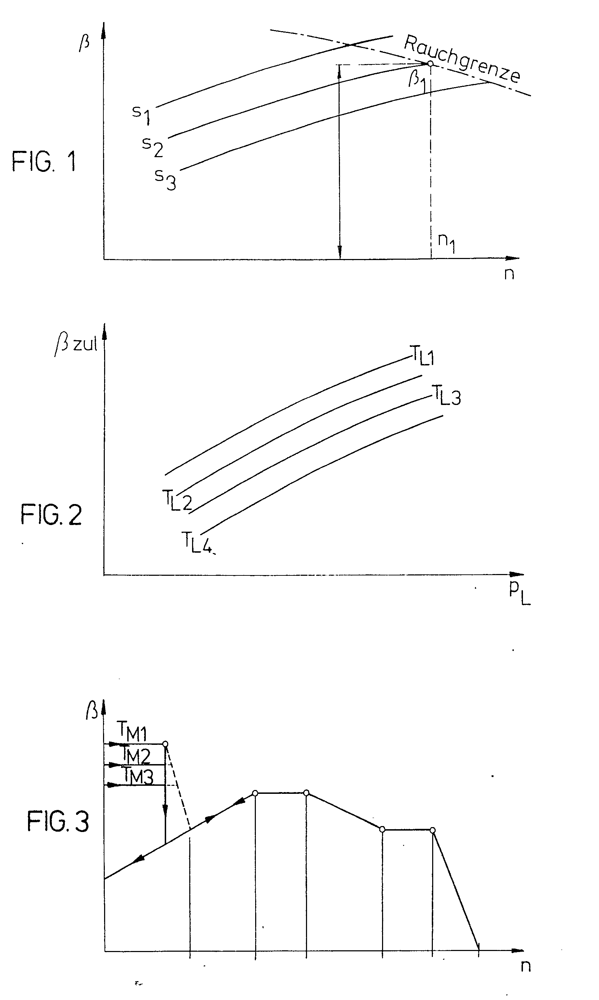

Fig. 1 zeigt, wie bei verschiedenen Regelgliedstellungen $s_1$ bis $s_3$ die Kraftstoffmenge über der Drehzahl n der Einspritzpumpe verläuft. Will man z. B. die Grenze der rauchfreien Verbrennung (Rauchgrenze) nicht überschreiten, so darf man bei der angenommenen Höchstdrehzahl $n_1$ höchstens die Fördermenge $\beta_1$ fördern, welche der Regelgliedstellung $s_2$ entspricht. Bei einem Betrieb des Motors mit einer Drehzahl unterhalb $n_1$ wird mit der konstanten Regelgliedstellung $s_2$ dann nicht mehr das bei dieser Drehzahl höchstmögliche Drehmoment err      da die Fördermenge $\beta$ entsprechend nied     ist. Aus diesem Grund ist ein fest eingeste      Fördermengenbegrenzungsanschlag von      chteil. Es wurden deshalb Einrichtungen geschaffen, welche den Fördermengenbegrenzungsanschlag in Abhängigkeit von der Drehzahl verändern. Mit solchen Ausgleichvorrichtungen können auch komplizierte Kurvenverläufe der Rauchgrenze oder der thermischen Belastbarkeit des Motors über der Drehzahl in Form von Nocken oder Kulissen dargestellt werden. Das Regelglied tastet dann die sinnvoll verstellte oder verdrehte Kulissen- oder Nockenform ab und kann auf diese Weise dem Motor in der Vollaststellung die höchste zulässige Fördermenge zukommen lassen.

Wie aus Fig. 2 hervorgeht, ist die größte zulässige Kraftstofffördermenge weiters auch eine Funktion des absoluten Luftdruckes und der Lufttemperatur. Es kann also mit steigendem Luftdruck und mit sinkender Lufttemperatur dem Motor eine wachsende Kraftstoffhöchstmenge zur rauchfreien Verbrennung zugeführt werden. Als weiterer Einfluß auf die Regelgliedanschlagstellung ist noch die Kraftstofftemperatur von Bedeutung. Mit zunehmender Kraftstofftemperatur ist nämlich die volumetrisch geförderte Kraftstoffmasse pro Förderhub geringer und bedarf einer entsprechenden Korrektur.

Dieselmotoren benötigen für den Anlaßvorgang im allgemeinen eine erhöhte Kraftstoffmenge, die manchmal auch größer ist als die größte bei Vollast und maximalem Ladedruck geförderte Kraftstoffmenge. Diese Startmenge hängt auch von der Motortemperatur (Zylinderkopftemperatur, Kühlwassertemperatur) und von der Temperatur der angesaugten Luft ab. Sie soll überdies nur dann vom Regelgliedanschlag freigegeben werden, wenn die Drehzahl vom Wert Null aus ansteigt, und soll dann bei Erreichen eines bestimmten Drehzahlwertes auf den normalen Betriebshöchstwert zurückgenommen werden. Eine Freigabe der Startmenge während des Motorlaufes darf auch bei geringer Motordrehzahl nicht erfolgen. Diese Zusammenhänge sind in Fig. 3 dargestellt.

Im Gebiet der Teillast wird die Steuerung der Kraftstofffördermenge beim Leerlauf-Enddreh-'zahlregler über das Fahrpedal bewirkt. Nur an der unteren Drehzahlgrenze (Leerlaufregelung) und an der oberen Drehzahlgrenze (Endabregelung) setzt jeweils ein Regelvorgang ein, welcher das Überschreiten dieser Grenzen verhindert. Beim Alldrehzahlregler wird jeweils eine Drehzahl im Rahmen des Betriebsdrehzahlbereiches vorgewählt, welche dann mit einer vom jeweiligen Lastdrehmoment abhängigen Genauigkeit eingeregelt wird. Die Fördermenge kann dabei sämtliche Werte zwischen Null und der Höchstfördermenge aufweisen und wird vom Fliehkraftregler in ihrer Größe bestimmt. Die Höchstfördermenge wird jeweils bei beiden Reglerbauarten durch den Vollastanschlag bzw. Fördermengenbegrenzungsanschlag festgelegt.

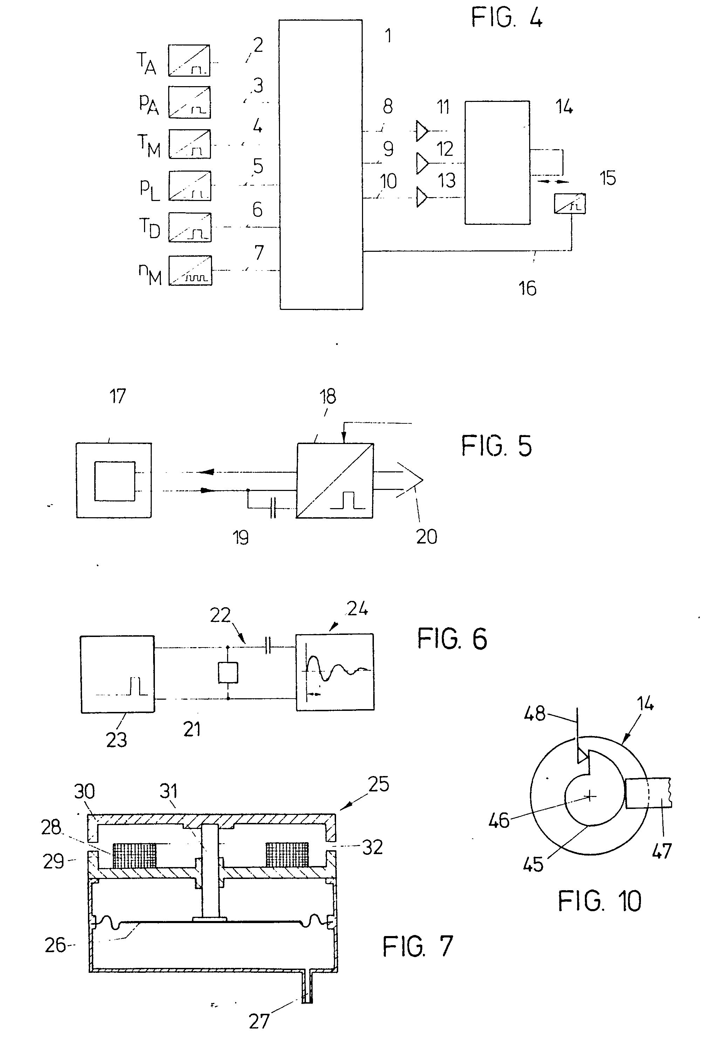

In Fig. 4 ist die erfindungsgemäße Schaltungs-anordnung schematisch dargestellt. Die Be-triebsgrößen, Außentemperatur ($T_A$), Außen-druck ($p_A$), Motortemperatur ($T_M$), Ladedruck ($p_L$), Treibstofftemperatur ($T_D$) und Motordreh-zahl ($n_M$) werden als digital verwertbare Signale in einem digital arbeitendem Mikrocomputer 1 verarbeitet.

Die Meßwertgeber sind über elektrische Leitungen 2, 3, 4, 5, 6 und 7 mit dem Eingang des Mikrocomputers 1 verbunden. Der Ausgang des Mikrocomputers führt über Leitungen 8, 9, 10 und Verstärker 11, 12, 13 zum Stellglied 14 für die Verstellung des Fördermengenbegrenzungsan-schlages. Die Position des Fördermengenbe-grenzungsanschlages kann von einem Sensor 15 erfaßt werden, dessen Signale über die Leitung 16 an den Mikrocomputer 1 rückgeführt werden können.

Durch die Weiterleitung der digital verarbeitbaren Signale der Meßwertgeber über die Leitungen 2, 3, 4, 5, 6 und 7 zum digital arbeitenden Mikrocomputer und die Weiterleitung der digitalen Signale des Mikrocomputers über die elektrischen Leitungen 8, 9 und 10 zum Stellglied 14 wird die Störanfälligkeit der Schaltungsanordnung bei Schwankungen der Versorgungsspannung wesentlich verringert und es treten keine Probleme mit der Temperaturstabilität und der Langzeitstabilität auf. Die jeweiligen Kennlinienfelder für verschiedene Motoren und Reglertemperaturen können durch geeignete Software dem frei programmierbaren Mikrocomputer eingegeben werden und es sind somit für die verschiedensten Motoren immer nur die gleichen Bauteile erforderlich.

Über die Software des Mikrocomputers ist es ohne weiteres möglich, die Freigabe der Startmenge nur dann zuzulassen, wenn der Motor eine vom Wert Null aus ansteigende Drehzahl liefert, und das Ausmaß der Freigabe der Startmenge kann ebenso einfach in Funktion von der Motortemperatur, beispielsweise der Zylinderkopftemperatur oder der Kühlwassertemperatur, und von der Temperatur der angesaugten Luft bestimmt sein. Eine unzulässige Freigabe der Startmenge bei laufendem Motor kann durch den Mikrocomputer in einfacher Weise verhindert werden.

In Fig. 5 ist ein Temperaturmeßwertgeber schematisch dargestellt. Mit 17 ist eine temperaturabhängige Konstantstromquelle bezeichnet. Der Temperaturabhängige Strom der integrierten Halbleiterschaltung der Konstantstromquelle 17 ist von der Versorgungsspannung unabhängig und wird einem monostabilen Multivibrator 18 zugeführt, welcher anstelle eines konventionellen RC-Gliedes die Konstantstromquelle 17 und den Kondensator 19 aufweist. Die Konstantstromquelle 17 wird somit das zeitbestimmende Glied dieser Anordnung und zeichnet sich durch einen sehr hohen Innenwiderstand aus, wodurch die Störanfälligkeit wesentlich herabgesetzt ist. Über die Leitung 20 wird dem Mikrocomputer eine der gemessenen Temperatur proportionale Zeitdauer zugeführt. Die Konstantstromquelle 17 und der Multivibrator 18 können ohne weiteres räumlich getrennt sein, ohne daß Störeinflüsse zu befürchten sind.

In Fig. 6 ist ein Druckmeßwertgeber schematisch dargestellt. Hierbei ist ein Drucksensor 21 als Teil eines Schwingkreises 22 eingesetzt, welcher durch einen Impulsgeber 23 angeregt wird, wobei der Impuls ohne weiteres vom Mikrocomputer selbst kommen kann. Der Schwingkreis wird durch den kurzen Impuls angeregt und die Periodendauer der Eigenschwingung durch die Schaltungsanordnung 24 gemessen. Das Signal der Schaltung 24 liegt somit bereits digital vor. Da im Resonanzfall beträchtliche Spannungserhöhungen auftreten, können der Kondensator und die restliche Meßanordnung räumlich getrennt vom Drucksensor 21 angeordnet werden. Eventuelle Nichtlinearitäten dieser Anordnung können bei der späteren Kennlinienberechnung im Mikrocom-puter berücksichtigt werden. Die Schaltungsan-ordnung 24 kann bereits im Mikrocomputer enthalten sein.

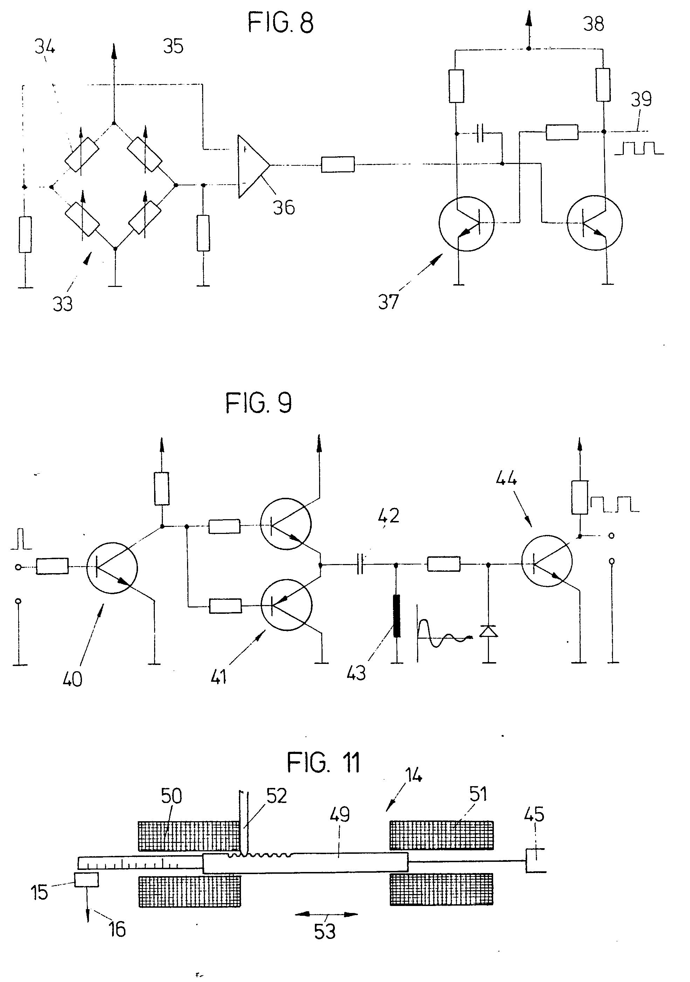

In Fig. 7 ist eine Druckmeßdosen-Spulen-Anordnung 25 dargestellt, deren Membran 26 von einem zu messenden Druck über eine Leitung 27 beaufschlagt ist. Die Spule 28 weist zwei Schalenkernhälften 29 und 30 auf. Die Schalenkernhälfte 29 ist hierbei starr festgelegt und die Schalenkernhälfte 30 über eine Verbindungsstange 31 mit der Membran 26 gekoppelt. Eine Bewegung der Membran ergibt somit eine Veränderung des Luftspaltes 32 und damit eine Veränderung der Induktivität. Diese Induktivität kann beispielsweise in der in Fig. 6 oder 9 gezeigten Schaltung durch Veränderung der Eigenresonanz eines Schwingkreises zur Messung des Druckes herangezogen werden.

In Fig. 8 ist eine Brückenschaltung 33 dargestellt, deren elektrisches Bauelement 34 druckempfindlich ist. In der gezeigten temperaturkompensierten Schaltung handelt es sich um Widerstände, jedoch kann das druckempfindliche elektrische Bauelement 34 in analoger Weise von einem druckempfindlichen Kondensator gebildet sein. Die Brückenschaltung 33 liegt bei 35 an einer konstanten Referenzspannung und die beiden Brückenausgänge sind mit einem Operationsverstärker 36 verbunden, dessen Ausgangsspannung proportional dem Druckmeßwert ist. Dieses Signal ist dem mit 37 bezeichneten monostabilen Multivibrator zugeführt, welcher bei 38 mit der Versorgungsspannung verbindbar ist. Der Multivibrator dient der Spannungs- bzw. Strom-Frequenzwandlung und das entsprechende unmittelbar digital verwertbare Signal wird über die Leitung 39 dem Mikrocomputer zugeführt.

In Fig. 9 ist eine spezielle Schaltungsanordnung für die Druckmessung mittels einer Druckmeßdosen-Spulen-Kombination näher erläutert. Die Schaltungsanordnung der Fig. 9 verwendet einen Serienschwingkreis, jedoch ist es ohne weiteres möglich, die prinzipiell gleiche Schaltung mit einem Parallelschwingkreis zu realisieren. Das Signal zur Anregung des Schwingkreises gelangt über eine Treiberstufe 40 an einen niederohmigen Gegentaktleistungsverstärker 41. Der Schwingkreis ist von einem Kondensator 42 und der veränderlichen Induktivität 43 gebildet, wobei die Induktivität in Abhängigkeit vom Druck, beispielsweise durch Verwendung einer Ausbildung des Druckmeßsensors nach Fig. 7, veränderlich ist. Die Eigenschwingung des Serienschwingkreises führt zu relativ großen Signalen, welche mit Vorteil der mit 44 bezeichneten Begrenzerverstärkungsschaltung zugeführt werden, wobei beispielsweise die Periodendauer der Resonanzfrequenz gemessen wird.

In Fig. 10 ist schematisch ein von einer Nockenscheibe gebildeter Begrenzungsanschlag 45 dargestellt, welcher von einem koaxial zur Drehachse 46 der Nockenscheibe angeordneten Schrittmotor verstellt werden kann und mit einem Fördermengenverstellglied 47, d. h. der Regelstange des Dieselmotors, zusammenwirkt. Der Schrittmotor kann unmittelbar durch die Signale des Mikrocomputers angesteuert werden, sofern seine Ausgangslage vor Ansteuerung genau bekannt ist. Hierzu kann der Schrittmotor entweder im stromlosen Zustand immer in eine für den Notbetrieb geeignete Stellung, welche einem genau definierten Schritt des Schrittmotors entspricht, durch Federn verstellt werden, oder aber ein Schalter 48 vorgesehen sein, welcher einer genau definierten Stellung des Schrittmotors entspricht und dessen Schaltimpuls das Erreichen dieser genau definierten Stellung dem Mikrocomputer meldet.

Das Stellglied für den Fördermengenbegrenzungsanschlag 45 kann aber auch, wie in Fig. 11 dargestellt ist, mit dem gemeinsamen Kern 49 und einer Spulenanordnung mit zwei Spulen 50 und 51 starr verbunden sein. Die Position des Kernes 49 kann durch eine mit 52 schematisch dargestellte Verriegelung gesichert sein und die jeweilige Position kann durch den Sensor 15 abgetastet und dem Mikrocomputer über die Leitung 16 mitgeteilt werden. Die Verschiebung in eine der beiden Richtungen des Doppelpfeiles 53 ergibt sich durch das Tastverhältnis, mit welchem die Spulen 50 und 51 an Spannung gelegt werden.

Als Drehzahlmeßgeber kann ein einfacher nicht dargestellter induktiver oder optoelektronischer Sensor verwendet werden, dessen Impulsfrequenz oder Pulsbreite in einfacher Weise unmittelbar durch den Mikrocomputer 1 ausgewertet werden kann.

**Patentansprüche**

1. Schaltungsanordnung für die Steuerung oder Regelung der Positionierung eines Fördermengenbegrenzungsanschlages (45) für die Regelstange (47) einer Dieseleinspritzbrennkraftmaschine in Abhängigkeit von Betriebskenngrößen derselben, wie z. B. Ladedruck, Außendruck, Motortemperatur, Außentemperatur, Kraftstofftemperatur, Drehzahl od. dgl., gekennzeichnet durch Meßwertgeber für die Betriebskenngrößen, in deren Ausgangssignalen der Meßwert in Form eines Zeitintervalls oder einer Periodendauer bzw. Frequenz vorliegt, einen digital arbeitenden Mikrocomputer (1), dessen Eingang die Ausgangssignale der Meßwertgeber über elektrische Leitungen (2, 3, 4, 5, 6, 7) zugeführt sind, und ein digital ansteuerbares Stellglied (14) für den Begrenzungsanschlag (45), welchem die digitalen Ausgangssignale des Mikrocomputers (1) über elektrische Leitungen (8, 9, 10) zugeführt sind.

2. Schaltungsanordnung nach Anspruch 1, dadurch gekennzeichnet, daß wenigstens ein Meßwertgeber für die Erfassung einer Temperatur als temperaturabhängige Konstantstromquelle (17) ausgebildet ist, welche mit einem Kondensator (19) elektrisch verbunden ist und mit diesem das zeitbestimmende Glied eines Multivibrators (18) bildet.

3. Schaltungsanordnung nach Anspruch 1, dadurch gekennzeichnet, daß wenigstens ein Meßwertgeber für die Erfassung eines Druckes von wenigstens einem druckempfindlichen elektrischen Bauelement (34) gebildet ist, welche(s) in einer vorzugsweise temperaturkompensierten Brückenschaltung (33) wenigstens einen Teil des zeitbestimmenden Gliedes eines Multivibrators (37) bildet oder bilden.

4. Schaltungsanordnung nach Anspruch 2 oder 3, dadurch gekennzeichnet, daß ein monostabiler Multivibrator (18, 37) vorgesehen ist.

5. Schaltungsanordnung nach Anspruch 1, dadurch gekennzeichnet, daß wenigstens ein Meßwertgeber für die Erfassung eines Druckes von einer Meßdosen-Spulen-Anordnung (25) gebildet ist, deren druckabhängige Induktivitätsveränderung die Resonanzfrequenz eines Schwingkreises bestimmt.

6. Schaltungsanordnung nach Anspruch 5, dadurch gekennzeichnet, daß die Meßdosen-Spulen-Anordnung (25) relativ zueinander verschieblich gelagerte Schalenkernhälften (29, 30) aufweist, wobei eine Schalenkernhälfte (29) ortsfest gelagert und die andere bewegliche Schalenkernhälfte (30) mit einer Membran (26) der Meßdose verbunden ist.

7. Schaltungsanordnung nach Anspruch 5 oder 6, dadurch gekennzeichnet, daß das Ausgangssignal des Resonanzschwingkreises einem Begrenzerverstärker (44) zugeführt ist, dessen im wesentlichen rechteckige Impulse dem Mikrocomputer zur Auswertung der Frequenz oder der Periodendauer zugeführt sind.

8. Schaltungsanordnung nach einem der Ansprüche 1 bis 7, dadurch gekennzeichnet, daß die Meßvorgänge der Meßwertgeber vom Mikrocomputer (1) einleitbar sind.

9. Schaltungsanordnung nach einem der Ansprüche 1 bis 8, dadurch gekennzeichnet, daß als Drehzahlmeßwertgeber (n_M) ein optoelektronischer, induktiver oder kapazitiver Aufnehmer eingesetzt ist, dessen Signal dem Mikrocomputer (1) zugeführt ist.

10. Schaltungsanordnung nach einem der Ansprüche 1 bis 9, dadurch gekennzeichnet, daß zur Verstellung des Fördermengenbegrenzungsanschlages (45) ein Schrittmotor mit vorbestimmter und/oder rückgemeldeter Ausgangslage vorgesehen ist, welcher über eine Getriebekette, beispielsweise eine Nockenscheibe, einen Gewindetrieb, einen Kurbeltrieb oder einen Zahnstangentrieb, mit dem Fördermengenbegrenzungsanschlag verbunden ist.

11. Schaltungsanordnung nach einem der Ansprüche 1 bis 9, dadurch gekennzeichnet, daß das Stellglied des Fördermengenbegrenzungsanschlages (45) vom gemeinsamen Kern (49) einer Spulenkombination (50, 51) gebildet ist, welcher Kern in jeder Stellung mechanisch feststellbar ist und in einem geschlossenen Regelkreis durch Änderung des Tastverhältnisses der Versorgungsspannung der Spulen durch den Mikrocomputer (1) verstellbar ist.

12. Schaltungsanordnung nach einem der Ansprüche 1 bis 9, dadurch gekennzeichnet, daß als Stellglied in einem an sich bekannten Servosystem, insbesondere in einem hydraulischen Servosystem, ein digital angesteuertes Hilfsaggregat, insbesondere ein elektromagnetisches Ventil vorgesehen ist.

## Claims

1. A circuit arrangement for controlling or regulating the positioning of a fuel delivery limiting stop for the control rod of a Diesel engine in accordance with operation parameters, e.g. supercharging pressure, atmospheric pressure, engine temperature, ambient temperature, fuel temperature, number of revolutions or the like, characterized by transducers for the operation parameters providing output signals representing the measuring value in the form of a time interval, period or frequency, resp., a digitally operating microcomputer (1) whose input receives the output signals of the transducers via electrical lines (2, 3, 4, 5, 6, 7), and a digitally controllable actuator (14) for the fuel delivery limiting stop (45) receiving the digital output signals of the microcomputer (1) via electrical lines (8, 9, 10).

2. The circuit arrangement as claimed in claim 1, characterized in that at least one transducer for sensing a temperature is designed as temperature-dependent current source (17) which is electrically connected with a capacitor (19) and therewith forms the time function element of a multivibrator (18).

3. The circuit arrangement as claimed in claim 1, characterized in that at least one transducer for sensing a pressure is designed as at least one pressure-responsive electrical component (34) which in a preferably temperature-compensated bridge circuit (33) form(s) at least a part of the time function element of a multivibrator (37).

4. The circuit arrangement as claimed in claim 2 or 3, characterized in that a monostable multivibrator (18, 37) is provided.

5. The circuit arrangement as claimed in claim 1, characterized in that at least one transducer for sensing a pressure is designed as gauge-coil-combination (25) the pressure-dependent variable inductance of which defines the resonant frequency of a resonant circuit.

6. The circuit arrangement as claimed in claim 5, characterized in that the gauge-coil-combination (25) comprises pot core halves (29, 30) arranged slidably with respect to each other, one pot core half (29) being arranged stationarily and the other, slidable pot core half (30) is coupled with a diaphragm (26) of the gauge.

7. The circuit arrangement as claimed in claim 5 or 6, characterized in that the output signal of the resonant circuit is fed to a limiting amplifier (44) whose substantially square pulses are fed to the microcomputer for evaluation of the frequency or period.

8. The circuit arrangement as claimed in any of claims 1 to 7, characterized in that the measuring operations of the transducers are initiated by the microcomputer (1).

9. The circuit arrangement as claimed in any of claims 1 to 8, characterized in that the revolution transducer (n_M) is an optoelektronic, an inductive or a capacitive transducer whose signal is fed to the microcomputer (1).

10. The circuit arrangement as claimed in any of claims 1 to 9, characterized in that displacement of the fuel delivery limiting stop (45) is effected by a stepper motor having predetermined and/or reverted starting position which is coupled with the fuel delivery limiting stop via a transmission means, e.g. a cam disc, a threaded gear drive, a crank gear or a rack-and-pinion gear.

11. The circuit arrangement as claimed in any of claims 1 to 9, characterized in that the actuator of the fuel delivery limiting stop (45) is formed by the common core (49) of a coil combination (50, 51), said core may be locked mechanically in each position and may be displaced under closed-loop control by altering the duty cycle of the supply voltage of the coils by the microcomputer (1).

12. The circuit arrangement as claimed in any of claims 1 to 9, characterized in that in a per se known servo system, particularly in a hydralic servo system, the actuator is a digitally controlled auxiliary aggregate, particularly a solenoid valve.

**Revendications**

1. Agencement de circuit pour la commande ou la régulation du positionnement d'une butée de limitation de débit (45) pour la tringle de réglage (47) d'un moteur Diesel à injection en fonction de paramètres de fonctionnement dudit moteur, comme par exemple le taux de compression, la pression extérieure, la température de moteur, la température extérieure, la température de carburant, la vitesse de rotation ou autres, caractérisé par le fait qu'il comprend des capteurs de valeurs de mesure des paramètres dans les signaux de sortie desquels la valeur de mesure est sous la forme d'un intervalle de temps ou bien d'une durée de période ou bien d'une fréquence, un micro-calculateur numérique (1) dont l'entrée recoit les signaux des capteurs de valeurs de mesure par l'intermédiaire de conducteurs électriques (2, 3, 4, 5, 6, 7), et un organe de monoeuvre (14), pouvant être commandé numériquement, de la butée de limitation (45), auquel sont appliqués les signaux numériques de sortie du micro-calculateur (1) par l'intermédiaire de conducteurs électriques (8, 9, 10).

2. Agencement de circuit selon la revendication 1, caractérisé par le fait qu'au moins un capteur de mesure des valeurs de température est agencé sous la forme d'une source de courant constant (17) sensible à la température, reliée électriquement à condensateur (19) et formant avec celui-ci l'organe de détermination de temps d'un multivibrateur (18).

3. Agencement de circuit selon la revendication 1, caractérisé par le fait qu'au moins un capteur de détection d'une pression est constitué par au moins un composant électrique (34) sensible à la pression, le ou lesdits composant constituant, dans un circuit à pont (33), de préférence compensé en température, au moins une partie de l'organe de détermination de temps d'un multivibrateur (37).

4. Agencement de circuit selon l'une des revendications 2 ou 3, caractérisé par le fait qu'il comprend un multivibrateur monostable (18, 37).

5. Agencement de circuit selon la revendication 1, caractérisé par le fait qu'au moins un capteur de mesure d'une pression est constitué par un ensemble de bobines et de boîtes de mesure (25), dont la variation d'inductance en fonction de la pression détermine la fréquence de résonance d'un circuit oscillant.

6. Agencement de circuit selon la revendication 5, caractérisé par le fait que l'ensemble de bobines et boîtes de mesure (25) comporte des moitiés de coquillages de noyau (29, 30) montées de facon à pouvoir se déplacer les unes par rapport aux autres, une moitié de coquille de noyau (29) étant placée dans une position fixe tandis que l'autre moitié de coquille de noyau mobile (30) est reliée à une membrane (26) de la boîte de mesure.

7. Agencement de circuit selon l'une des revendications 5 ou 6, caractérisé par le fait que le signal de sortie du circuit oscillant à résonance est appliqué à un amplificateur-limiteur (44) dont les impulsions, de forme essentiellement rectangulaire, sont transmises au micro-calculateur en vue de la détermination de la fréquence ou de la durée de période.

8. Agencement de circuit selon l'une des revendications 1 à 7, caractérisé par le fait que les processus de mesure des capteurs de valeur de mesure peuvent être enclenchés par le micro-calculateur (1).

9. Agencement de circuit selon l'une des revendications 1 à 8, caractérisé par le fait qu'on utilise comme capteurs de valeurs de mesure de vitesse de rotation ($n_M$) un récepteur opto-électronique, inductif ou capacitif dont le signal est appliqué au micro-calculateur (1).

10. Agencement de circuit selon l'une des revendications 1 à 9, caractérisé par le fait qu'il comprend, pour la manoeuvre de la butée de limitation de débit (45), un moteur pas-à-pas comportant une position initiale prédéterminée et/ou répétitive, et qui est relié, par l'intermédiaire d'une chaîne de transmission par exemple un disque formant came, un mécanisme à filetage, un mécanisme à manivelle ou un mécanisme à crémaillère, avec la butée de limitation de débit.

11. Agencement de circuit selon l'une des revendications 1 à 9, caractérisé par le fait que l'organe de manoeuvre de la butée de limitation de débit (45) est constitué par un noyau commun (49) d'un ensemble de bobines (50, 51), ledit noyau pouvant être bloqué mécaniquement dans toute position appropriée et pouvant être déplacé dans un circuit de réglage fermé par modification du rapport entre les tensions d'alimentation des bobines par le micro-calculateur (1).

12. Agencement de circuit selon l'une des revendications 1 à 9, caractérisé par le fait qu'i comprend comme organe de manoeuvre, dans un servo-systéme de type connu, notammen dans un servo-systéme hydraulique, un groupe auxiliaire à commande numérique notammen une valve électromagnétique.

FIG. 1

$\beta$

$s_1$

$s_2$

$s_3$

Rauchgrenze

$\beta_1$

$n_1$

n

FIG. 2

$\beta$ zul

$T_{L1}$

$T_{L3}$

$T_{L2}$

$T_{L4}$

$p_L$

FIG. 3

$\beta$

$T_{M1}$

$T_{M2}$

$T_{M3}$

n

FIG. 4

$T_A$  2  1

$p_A$  3  8  11  14

$T_M$  4  9  12

$p_L$  5  10  13  15

$T_D$  6

$n_M$  7  16

FIG. 5

17  18

19  20

FIG. 6

22  24

23  21

FIG. 10

48  14

46

45  47

30  31  25

28

29  32

26

FIG. 7

27

## FIG. 8

## FIG. 9

## FIG. 11